# EUROPEAN PATENT SPECIFICATION

(11) **EP 4 574 370 B1**
(45) Date of publication and mention of the grant of the patent: **22.04.2026**
(21) Application number: 24219333.2
(22) Date of filing: 12.12.2024
(51) Int. Cl.: B27M 1/08, B27B 5/065, B27G 19/08, B23D 59/00

(54) **CUTTING UNIT, MACHINE TOOL, AND METHOD FOR MACHINING PANELS**
SCHNEIDWERK, WERKZEUGMASCHINE UND VERFAHREN ZUR BEARBEITUNG VON PLATTEN
UNITÉ DE COUPE, MACHINE-OUTIL ET PROCÉDÉ D'USINAGE DE PANNEAUX

(30) Priority: 22.12.2023 IT 202300027765
(43) Date of publication of application: 25.06.2025
(73) Proprietor: SCM Group S.p.A., 47921 Rimini (RN) (IT)
(72) Inventor: MAZZA, Michele, 47921 RIMINI (RN) (IT); BAGGIARINI, Elia, 47921 RIMINI (RN) (IT); PIERETTI, Carlo, 47921 RIMINI (RN) (IT)
(74) Representative: Tiburzi, Andrea

(56) References cited:
- EP-B1- 2 969 422
- US-A- 6 041 271
- US-A1- 2014 130 643
- US-B2- 8 210 082

## Description

### Technical field of the invention

The present invention concerns a cutting unit for a panel processing machine, comprising a support; at least one cutting tool associated with said support and adapted to make at least one cut on at least one panel or pack of panels, so as to separate at least a first portion of said panel or pack of panels from the remaining part of the panel or pack of panels, creating a space between said first portion and the remaining part of the panel or pack of panels, said support and said panel or pack of panels being movable with respect to each other; and an image capturing device adapted to be associated with said support. The present invention also concerns a method for machining panels including the steps of: making at least one cut on at least one panel or pack of panels (P), so as to separate at least a first portion (P1) of said panel or pack of panels (P) from the remaining part (P2) of the panel or pack of panels (P), creating a space (S) between said first portion (P1) and the remaining part (P2) of the panel or pack of panels (P). Such a cutting unit, and such a method for machining panels is known from the document US 6 041 271 A.

### State of the art

There are different types of machine tools for machining panels, in particular wooden panels or similar materials.

Machine tools known as "work centers" are known, in which so-called nesting machining are carried out. Nesting processing means a type of machining in which pieces of different shapes and sizes are obtained from a single panel, reducing waste parts to a minimum, using a tool, such as a disc or shaped blade, cylindrical cutters or shaped, and the like.

Generally, machining centers for nesting have a base, a support surface of at least one panel, generally in aluminum or Bakelite, arranged on the base, a movable crosspiece along the base, generally positioned above the surface, which can be mobile or fixed with respect to the support surface. Typically, the crosshead supports one or more machining heads. Each machining head is movable along at least one axis. Generally, each machining head is equipped with a spindle, coupled, in use, to a tool holder, which can in turn be coupled to a specific tool depending on the type of machining to be performed.

In nesting, the machining tool is usually a cutter, for example, an end mill, capable of drilling the panel and cutting out the required parts. The end mill is moved following a cutting pattern, designed to maximize the use of the panel, reducing waste to a minimum.

Machine tools called panel saws are also known, designed to cut panels according to a cutting direction.

A panel sawing machine comprises a first loading/unloading station for a piece or a pack of pieces, a machining station and a second exit/entry or loading/unloading station, usually provided with a surface, from which the machined pieces they are loaded or picked up by an operator or a mechanical arm.

The pieces are usually moved from the first loading station towards the processing station by means of a handling member commonly identified as a "pusher" group, which comprises a system of clamps designed to clamp the rear portion of the panel with respect to the feeding direction. This system of grippers is supported above the workpiece support surface by a support structure, which is movable along the feeding direction by means of actuator means.

Subsequently the pieces are cut using a cutting unit that slides along a cutting direction, generally transverse to the plane on which the panels are fed. Following the cutting, the pieces are then unloaded in the first or second loading/unloading station, to be picked up or reintroduced into the machine for subsequent processing.

The cutting unit comprises a cutting blade, rotating in a first direction, preceded by an engraving blade, rotating in the direction opposite to the first direction of the cutting blade. The engraving blade generally has a smaller diameter than the cutting blade and a slightly greater thickness, of a few tenths of a millimeter, and is designed to realize an incision only on the surface of the face of the panel from which the teeth are expected to emerge of the cutting blade, so as not to create chips protruding from the surface.

To ensure that during cutting the groove created by the first blade is aligned with the cut made by the second blade, in a known type of cutting machine, a video camera is associated with the cutting unit, to capture the lower part of the panel after sectioning. The images provided by the camera allow checking whether the scoring blade is aligned with the cutting blade. In the event that the two blades are not aligned, a control system adjusts the cutting blade.

However, this system does not allow controlling the quality of the work carried out on the surface of the side of the panel where the cut was made.

If the cut involves a plurality of overlapping panels, the surface of each panel cannot be checked, but only the lower part of the panel in contact with the panel support and movement surface.

Furthermore, the system described cannot be used in work centers that carry out nesting operations.

The relevant state of the art also comprises documents US6041271A, US8210082B2, EP2969422B1 and US2014/130643A1.

### Summary of the invention

Therefore, the technical problem, posed and solved by the present invention, is that of providing a cutting unit that allows the above-mentioned drawbacks relating to the prior art to be overcome.

One purpose of the invention is to control the surface quality of the side of the panel where the cut was made.

A further purpose of the invention is to check the surface of different panels after the cutting operation.

Yet another aim of the invention is to check the surface of a panel both after a cutting operation and after a nesting process.

This technical problem is solved by a cutting unit according to claim 1.

Preferred features of the present invention are described in the dependent claims.

According to another aspect of the present invention, a machine tool having the features defined in claim 11 is provided.

According to a further aspect of the present invention, a machine tool is provided having the features defined in claim 12.

According to yet another aspect of the present invention, a method for machining panels includes the features defined in claim 15.

The present invention provides some significant advantages.

The detection element allows capturing images of the entire surface involved in the cut.

In this way it is possible to control various aspects related to the quality of the workmanship.

Advantageously, the image acquisition device is integral with the mobile support, on which the cutting tool is mounted, so as to move, following the cut and acquire the images following the cutting operation.

Preferably, the acquisition device is operationally connected to a control unit. This allows to immediately checking the quality of the cut and stop processing if the quality is not satisfactory.

Other advantages, features and methods of use of the present invention will be evident from the following detailed description of some embodiments, presented for illustrative and non-limiting purposes.

### Brief description of the figures

The present invention will be now described, for illustrative but not limitative purposes, according to its preferred embodiments, with particular reference to the figures of the enclosed drawings, wherein:
figure 1 shows a perspective view of a first type of machine tool, in particular a cutting machine;
figure 2 shows a pack of panels after the processing carried out by the cutting machine;
figure 3 shows a perspective view of a detail of a cutting machine that has a cutting unit according to a first embodiment of the present invention;
figure 4 shows a side view of the cutting machine of figure 3;
figure 5 shows a detail of the detection element of the acquisition unit in a first embodiment;
figure 6 schematically shows the image acquisition device in a second embodiment of the present invention;
figure 7 shows a detail of the detection element in the embodiment of figure 6;
figure 8 shows a perspective view of a detail of a cutting machine that has a cutting unit in a third embodiment of the present invention;
figure 9 shows a side view of the cutting machine of figure 8;
figure 10 shows the acquisition device in the third embodiment of the present invention;
figure 11 schematically shows a cutting unit associated with a control unit;
figure 12 shows a perspective view of a second type of machine tool, in particular a machining center.

### Detailed description of preferred embodiments

The description below will refer to the use of a cutting unit in a panel saw, but it must not be considered limited to this specific use, as the cutting unit can also be applied to other types of machines, such as example work centers for carrying out nesting operations.

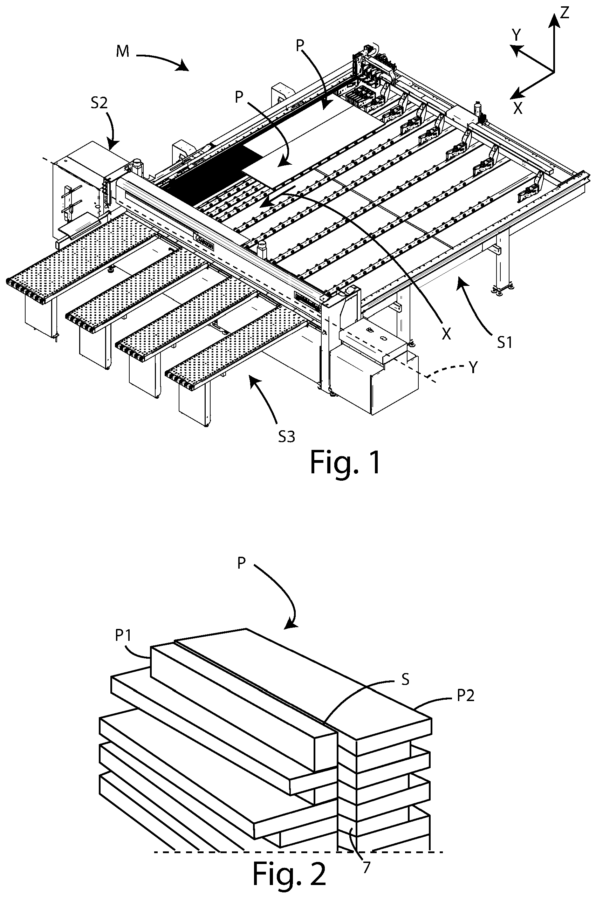

Figure 1 shows a cutting machine of a known type.

In the following description, reference will be made, in a non-limiting way, to a cutting machine M and to wooden panels P or to packs of wooden panels, arranged stacked one on top of the other.

Referring in particular to figure 1, the cutting machine M essentially comprises an input station S1, used for loading/unloading the panel P, at least a processing station S2 to carry out a respective machining on one or more panels P, a station output S3, used for unloading/loading panel P, and a logical control unit, in which pre-established cutting patterns are stored.

Said output station S3 can also be used as a loading station for the panels to be reinserted into the cutting machine M to perform further cuts.

The panels P that has to be subjected to machining are arranged on a support surface of said loading station S1 and advance on said support surface along a direction of advancement X, until they reach the processing station S2, through the exerted by one or more handling groups, such as pushers, each of which can include one or more gripping and pushing elements, such as for example grippers for gripping and moving the panel P to be processed.

The processing station S2 comprises a cutting unit and a work surface, on which the panel P to be cut is placed.

The cutting unit comprises a carriage movable along a processing direction Y, which is in turn orthogonal to said advancement direction X, in a longitudinal chamber formed under said work surface.

In the cutting machine M, movement means are also provided to move said carriage along said processing direction, in both directions of travel.

The cutting tool is mounted on said carriage, in particular a circular blade, which slides along said processing direction, performing forward and backward strokes.

Said circular blade lies on a Y-Z plane, defined by said Y processing direction and by a Z development direction, orthogonal to said X advancement direction and Y machining direction.

A longitudinal slot is obtained in the same work surface, which extends along said Y processing direction.

Above said work surface there is a blocking means, such as a pressure member, which extends along said processing direction Y and is movable along said development direction Z, between a raised rest position and a lowered working position, so such as to allow the blocking of the panel P to be worked between the work surface and the pressure member itself.

Said circular blade is able to cross said longitudinal slot, protruding from said work surface for a given portion, so as to cut the panel P along a cutting line L, parallel to said processing direction Y.

The blade makes a cut such as to separate at least a first portion P1 of said panel or pack of panels P from the remaining part P2 of the panel or pack of panels P, creating a space S between said first portion P1 and the remaining part P2 of the panel or the pack of panels P, as illustrated in figure 2.

Said circular blade is also rotatable around a rotation axis, orthogonal to the aforementioned Y-Z plane and therefore parallel to said direction of advancement X.

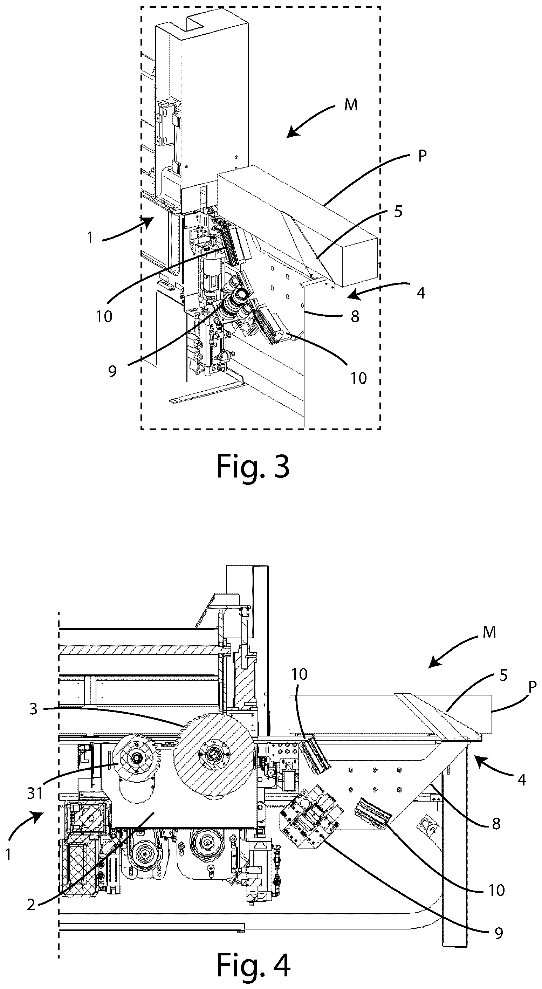

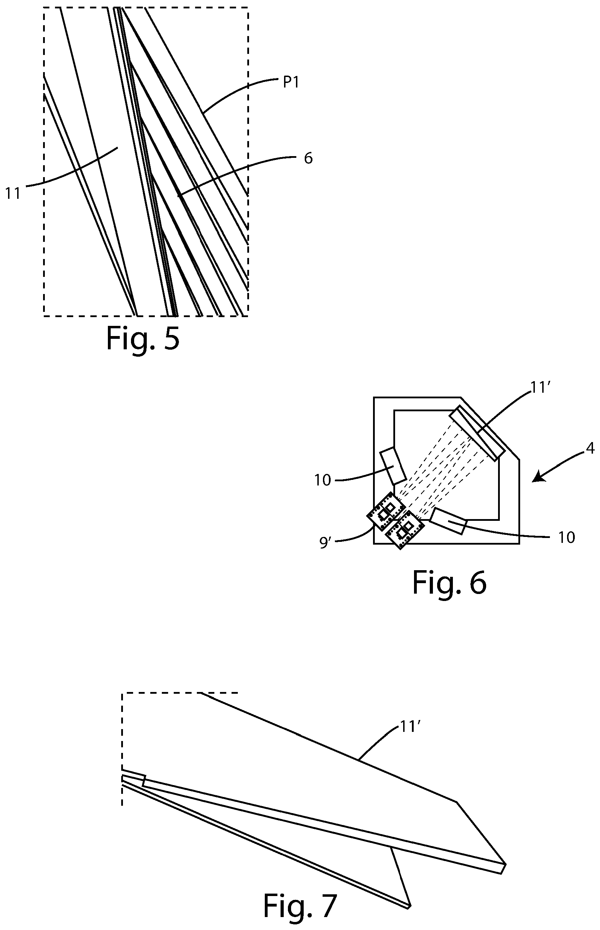

Figures 4 and 5 show a panel saw M, on which a cutting unit 1 is installed in a first embodiment of the present invention.

According to the invention, the cutting unit 1 comprises a support 2; at least one cutting tool 3 associated with said support 2 and capable of making at least one cut on at least one panel or a pack of panels P, so as to separate at least a first portion P1 of said panel or pack of panels P from the remaining part P2 of the panel or pack of panels P, creating a space S between said first portion P1 and the remaining part P2 of the panel or pack of panels P, said support 2 and said panel or pack of panels P being movable with respect to each other, and a device 4 for image acquisition capable of being associated with said support 2.

The image acquisition device 4 comprises at least one detection element 5, suitable for the insertion into the space S created between said first portion P and the remaining part P2 of the panel or pack of panels P, said detection element 5 being suitable for detecting at least a zone 6 of the surface of the first portion P1, which overlooks said space S and/or at least a zone 7 of the surface of the remaining part P2 of the panel or pack of panels facing said space.

Preferably the sensing element 5 is substantially flat.

Advantageously, the detection element 5 has a thickness such as to fit into the space S created between the first portion P1 and the remaining part P2 of the panel or pack of panels P.

By way of example, the maximum thickness of a single panel is approximately 160 mm. The minimum thickness of the space created between the first portion P1 and the remaining part P2 of the panel or pack of panels P is approximately 4 mm.

The thickness of the sensing element 5 is preferably between about 3 mm and about 5 mm, particularly between about 3.6 mm and 4.2 mm.

In the illustrated embodiment the support 2 is movable with respect to the panel or pack of panels P.

The cutting tool 3 is a circular blade.

The circular blade 3 slides along the processing direction, performing back and forth strokes.

Advantageously, the cutting unit includes a blade 31 for making an incision, in particular a circular blade that rotates in the opposite direction with respect to the cutting blade.

In a first embodiment, illustrated in figures 3 and 4, the acquisition device 4 comprises a support element 8, on which at least one camera 9 is fixed. The acquisition device 4 preferably comprises one or two linear cameras.

Advantageously, the acquisition device 4 comprises at least one light source 10.

The light source 10 is advantageously fixed to the support element 8. Preferably, the light source comprises a linear LED source.

In an alternative embodiment, the light source can be arranged in the work surface of the machine or in the pressure member.

The detection element 5 is arranged in correspondence with the portion of the support element 8 opposite to the area in which the camera 9 is fixed.

In the embodiment illustrated in figures 3-5, the sensing element 5 comprises a reflective surface 11. Preferably the reflective surface 11 has a sheet metal, for example stainless steel (INOX), with an inclined cut of 45°, in particular mirror-finished (figure 5).

The camera 9 and, if present, the light source 10, are arranged in the area of the machine M below the panel movement plane P. The camera 9 faces the reflecting surface 11, which fits into the space S created between the subdivided panels. The reflecting surface 11 is therefore located above the movement plane of the panels P.

In a second embodiment, illustrated schematically in figure 6, the acquisition device comprises a support element 8, on which at least one matrix camera 9' is fixed. Advantageously, the acquisition device 4 comprises at least one light source 10 fixed to the support element 8. Preferably, the light source comprises a linear LED source.

A double reflective surface 11' is arranged in correspondence with the portion of the support element 8 opposite to the area in which the camera 9' is fixed. Preferably the double reflective surface 11' comprises a metal sheet, for example in stainless steel, with a double inclination cut of 45°, in particular mirror-finished (figure 7).

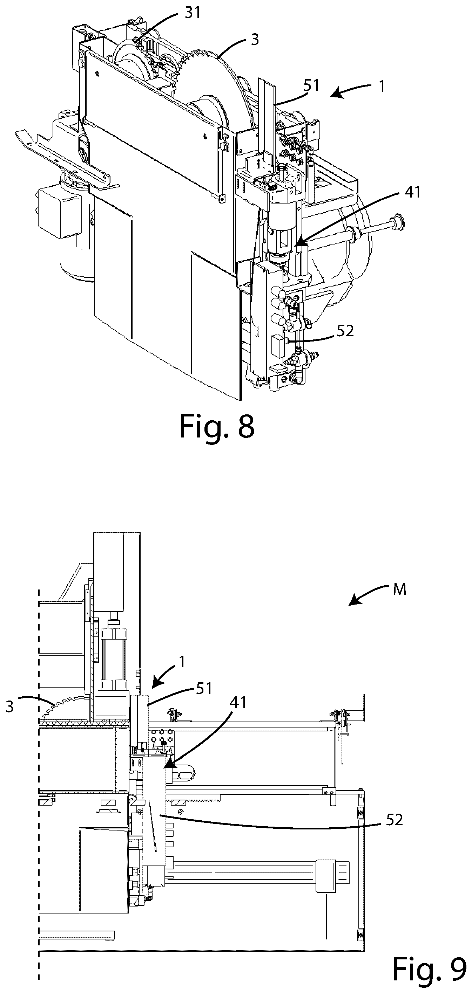

In a third embodiment, illustrated in figures 8-10, the acquisition device 41 comprises a detection element 51, in which at least one scanning sensor is integrated. The sensing element is substantially flat. In particular, the sensing element 51 comprises at least one contact image sensor.

Contact Image Sensors (CIS) are image sensors used in flatbed scanners that come into direct contact with the object to be scanned. The CIS sensor is a much smaller sensor than a CCD line sensor, and allows all the necessary optical elements to be included in one compact module.

Preferably, the sensing element 51 is substantially rectangular in shape.

In particular, the sensing element 51 has a length between approximately 50 mm and approximately 300 mm. The sensing element 51 preferably has a width between about 35 mm and about 45 mm, in particular about 40 mm.

Advantageously, a light source, for example comprising LEDs, is integrated into the sensing element 51.

As illustrated in figures 8 and 9, the sensing element 51 extends above the panel movement plane and fits into the space created between the divided panels.

The detection element 51 is preferably connected to a module 52 comprising the acquisition electronics.

In the embodiments illustrated in figures 3-10, the sensing element 5 is integral with the support 2 to which the cutting tool 3 is associated.

The cutting unit advantageously comprises an encoder 13 arranged on the support 2. The encoder 13 allows the acquisition of images to be synchronized with the movement speed of the acquisition device, so as to faithfully reconstruct the images of the entire pack of panels.

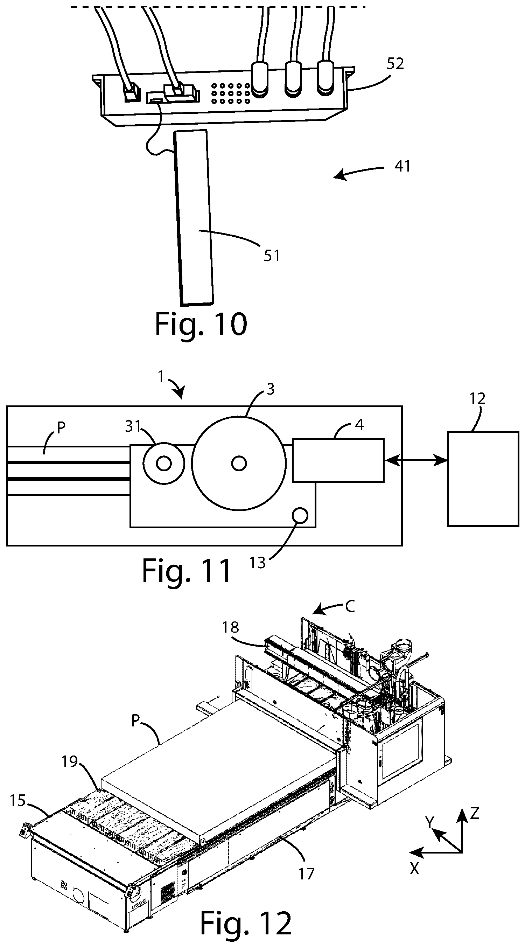

As illustrated schematically in figure 11, the acquisition device is operationally connected to a control unit 12.

The control unit 12 preferably comprises image acquisition software and/or image processing software.

In particular, the control unit 12 comprises one or more programs for comparing the acquired images with reference images, in order to control the cutting quality. The image processing software preferably comprises Artificial Intelligence software. Pre-trained neural networks can be provided in the software.

Preferably, the control unit 12 comprises a unit external to the cutting area, for example an edge PC, connected to the acquisition device 4 by cables or wirelessly.

In an alternative embodiment the control unit 12 is at least partially integrated into the acquisition device.

Advantageously, the control unit 12 comprises a graphical interface.

In the embodiment illustrated in figures 8-10, the module 52 comprising the acquisition electronics is connected to a control unit 12.

According to an aspect of the present invention, the cutting unit 1 comprising the acquisition device 4 is arranged in a machine tool M for machining panels, in particular wooden panels, such as a panel saw, comprising at least one loading/unloading station S1, S3 of at least one panel or a pack of panels P, a processing station S2 including a work surface, to support said at least one panel or a pack of panels P, a handling unit to move said at least one panel or a pack of panels P along a direction of advancement X, approaching and/or moving away from said processing station S2; and a cutting unit 1, wherein the cutting unit 1 is movable along a cutting line L orthogonal to said direction of advancement X, to cut said at least one panel or a pack of panels P.

Advantageously, the cutting unit 1 is associated with a cleaning device to remove material residues due to processing. This cleaning device can comprise, for example, a blowing nozzle for blowing a pressurized fluid (i.e. air), or a brush, or alternatively an air blade.

According to another aspect of the present invention, the cutting unit 1 comprising the acquisition device 4 is arranged in a machine tool for machining panels such as a machining center C, comprising a support plane 15 to support at least one panel P, a machining head 16, opposite to said support surface 15 and equipped with at least one tool for processing said panel P.

Figure 12 shows a machine tool C known as a work center, in particular for carrying out nesting operations.

The machine C comprises a support surface 15, generally made of aluminum or Bakelite, for supporting and blocking at least one panel P to be machined. The support surface 15 is arranged on a base 17.

Machine C has a crosspiece 18, opposite to the support plane 15, which can be mobile or fixed with respect to the support plane 15, coupled to one or two vertical uprights. The crosspiece 18 supports one or more machining heads 16. Generally, each machining head 16 is provided with a spindle, coupled, in use, to a tool holder, which can in turn be coupled to a tool 3, for example a cutter.

The machining head 16 is movable along a first 18, and is also mobile along a third Z axis orthogonal to the first of rotation.

Generally, on the support surface there is a panel 19, called martyr panel, made of MDF, wood or similar materials. The panel P to be machined is arranged above the martyr panel 19.

In the machine illustrated in figure 12, the cutting unit comprises the crosspiece 18 supporting at least one machining head 16, to which at least one cutting tool is associated.

In the machine illustrated in figure 12, in a first embodiment the detection element 5 of the acquisition device 4 is associated with the machining head during processing and follows the movement of the cutting tool during processing.

In a second embodiment, the cutting tool 3 carries out the nesting process and subsequently the sensing element 5 is inserted into the space S between the portion of the panel P1 obtained from a first panel P and the remaining part P2 of the first panel and moved along the space S created by the cut. In the second embodiment, the sensing element 5 can be made as an aggregate that can be coupled and decoupled to the spindle of the machining head 16, or it can be arranged on the machining head 16.

The sensing element can be arranged on the crosspiece 18 on a support, independent of the support of the machining head 16, and movable on the crosspiece 18 along the Y and Z directions.

Advantageously, the cutting unit 1 is associated with a cleaning device to remove material residues due to the processing. This cleaning device can comprise, for example, a blowing nozzle for blowing a pressurized fluid (i.e. air), or a brush, or alternatively an air blade.

The present invention also concerns a method of machining panels, in particular wooden panels, comprising the steps of:
making at least one cut on at least one panel or pack of panels P, to separate at least a first portion P1 of said panel or pack of panels P, from the remaining part P2 of the panel or pack of panels P, creating a space S between said first portion P1 and the remaining part P2 of the panel or pack of panels P;
inserting a detection element 5 of an image acquisition device into the space S created between said first portion P1 and the remaining part P2 of the panel or pack of panels P;
capturing at least one image of at least one area 6 of the surface of the first portion P1 facing said space S and/or at least one area 7 of the surface of the remaining part P2 of the panel or pack of panels P, which faces said space;
comparing the captured image with a reference image.

Preferably, the method comprises the steps of moving the detection element 5 along the space S created between said first portion P1 and the remaining part P2 of the panel or pack of panels P;
acquiring at least one image of at least one zone 6 of the surface of the first portion P1 which faces said space S and/or at least one zone 7 of the surface of the remaining part P2 of the panel or pack of panels P which faces said space while moving the sensing element 5.
capturing at least one image of at least one area (6) of the surface of the first portion (P1) facing said space (S) and/or at least one area (7) of the surface of the remaining part (P2) of the panel or pack of panels (P) facing said space during the movement of the detection element (5).

Advantageously, the method comprises a processing step of the acquired image.

In particular, the processing step and/or the comparison step is carried out using Artificial Intelligence software.

## Claims

1. Cutting unit for a panel processing machine, comprising a support (2, 18); at least one cutting tool (3) associated with said support (2, 18) and adapted to make at least one cut on at least one panel or pack of panels (P), so as to separate at least a first portion (P1) of said panel or pack of panels (P) from the remaining part (P2) of the panel or pack of panels (P), creating a space (S) between said first portion (P1) and the remaining part (P2) of the panel or pack of panels (P), said support (2, 18) and said panel or pack of panels (P) being movable with respect to each other; and an image capturing device (4; 41) adapted to be associated with said support (2, 18), said cutting unit being **characterized in that** said image capturing device (4) comprises at least one detection element ( 5; 51) adapted to be inserted into the space (S) created between said first portion (P1) and the remaining part (P2) of the panel or pack of panels (P), said detection element (5; 51) being adapted to detect at least one area (6) of the surface of the first portion (P1) facing said space (S) and/or at least one area (7) of the surface of the remaining part (P2) of the panel or pack of panels (P) facing said space (S).

2. Cutting unit according to the previous claim, **characterized in that** said detection element (5) comprises at least one reflecting surface.

3. Cutting unit according to any one of the previous claims, **characterized in that** said capturing device (4) comprises at least one camera (9, 9').

4. Cutting unit according to any one of the previous claims 1-3, **characterized in that** said detection element (51) comprises at least one scanning sensor.

5. Cutting unit according to the previous claim, **characterized in that** said detection element (51) comprises at least one contact image sensor.

6. Cutting unit according to any one of the previous claims, **characterized in that** said detection element (5; 51) is substantially flat.

7. Cutting unit according to any one of the previous claims, **characterized in that** the capturing device (4; 41) comprises at least one light source (10), in particular integrated in the detection element (5; 51).

8. Cutting unit according to any one of the previous claims, **characterized in that** said image capturing device (4; 41) is integral with said support (2).

9. Cutting unit according to any one of the previous claims 1-7, **characterized in that** said image capturing device (4; 41) is movable with respect to said support (2).

10. Cutting unit according to any one of the previous claims, **characterized in that** said detection element (5; 51) is movable along the cutting line made by the cutting tool (3).

11. Machine tool for machining panels, in particular wooden panels, comprising at least one loading/unloading station (S1, S3) of at least one panel or pack of panels (P); a processing station (S2) comprising a working plane, to support said at least one panel or pack of panels (P), a movement group to move said at least one panel or pack of panels (P) along a direction of advancement (X), approaching and/or moving away from said processing station (S2); and a cutting unit according to any one of the previous claims, wherein the cutting unit is movable along a cutting line (L) orthogonal to said direction of advancement (X), to cut said at least one panel or pack of panels (P).

12. Machine tool for machining panels, in particular wooden panels, comprising a support plane (15) to support at least one panel (P), a machining head (16), opposite to said support surface (15) and equipped with at least one tool (3) for processing said panel (P), said machining head (16) comprising a cutting unit according to any one of the previous claims 1-10.

13. Machine tool according to the previous claim, **characterized in that** said image capturing device (4; 41) is movable with respect to said machining head.

14. Machine tool according to any one of claims 11-13, comprising a control unit (12) operatively connected to said image capturing device (4; 41), said control unit (12) being configured to compare the captured images with reference images.

15. Method of machining panels, in particular wooden panels, including the steps of:
making at least one cut on at least one panel or pack of panels (P), so as to separate at least a first portion (P1) of said panel or pack of panels (P) from the remaining part (P2) of the panel or pack of panels (P), creating a space (S) between said first portion (P1) and the remaining part (P2) of the panel or pack of panels (P);
**characterized in that** it comprises, inserting a detection element (5) of an image capturing device into the space (S) created between said first portion (P1) and the remaining part (P2) of the panel or pack of panels (P);
capturing at least one image of at least one area (6) of the surface of the first portion (P1) facing said space (S) and/or at least one area (7) of the surface of the remaining part (P2) of the panel or pack of panels (P) facing said space;
comparing the captured image with a reference image.

16. Method according to the previous claim, comprising the steps of:
moving the detection element (5) along the space (S) created between said first portion (P1) and the remaining part (P2) of the panel or pack of panels (P);
capturing at least one image of at least one area (6) of the surface of the first portion (P1) facing said space (S) and/or at least one area (7) of the surface of the remaining part (P2) of the panel or pack of panels (P) facing said space during the movement of the detection element (5).

17. Method according to any one of claims 15 or 16, comprising a processing step of the captured image.

## Patentansprüche

1. Schneidwerk für eine Plattenverarbeitungsmaschine, die einen Träger (2, 18) umfasst; mindestens ein Schneidwerkzeug (3), das mit dem Träger (2, 18) verbunden ist und geeignet ist, mindestens einen Schnitt an mindestens einer Platte oder einem Plattenpaket (P) auszuführen, um mindestens einen ersten Abschnitt (P1) der Platte oder des Plattenpakets (P) von dem verbleibenden Teil (P2) der Platte oder des Plattenpakets (P) zu trennen, Erzeugen eines Raums (S) zwischen dem ersten Abschnitt (P1) und dem verbleibenden Teil (P2) der Platte oder des Plattenpakets (P), wobei der Träger (2, 18) und die Platte oder das Plattenpaket (P) in Bezug zueinander beweglich sind; und eine Bildaufnahmevorrichtung (4; 41), die zur Verbindung mit der genannten Halterung (2, 18) geeignet ist, wobei die Schneideinheit **dadurch gekennzeichnet ist, dass** die Bildaufnahmevorrichtung (4) mindestens ein Detektionselement (5; 51) umfasst, das in den zwischen dem ersten Abschnitt (P1) und der Schneideinheit entstehenden Raum (S) eingefügt werden kann, und dem verbleibenden Teil (P2) der Platte oder des Plattenpakets (P), wobei das Erfassungselement (5; 51) geeignet ist, mindestens einen Bereich (6) der Oberfläche des ersten Abschnitts (P1), der dem Raum (S) zugewandt ist, und/oder mindestens einen Bereich (7) der Oberfläche des verbleibenden Teils (P2) der Platte oder des Plattenpakets (P), der dem Raum (S) zugewandt ist, zu erfassen.

2. Schneidwerk nach dem vorhergehenden Anspruch, **dadurch gekennzeichnet, dass** das Erfassungselement (5) mindestens eine reflektierende Oberfläche aufweist.

3. Schneidwerk nach einem der vorhergehenden Ansprüche, **dadurch gekennzeichnet, dass** die Erfassungsvorrichtung (4) mindestens eine Kamera (9, 9') umfasst.

4. Schneidwerk nach einem der vorhergehenden Ansprüche 1-3, **dadurch gekennzeichnet, dass** das Erfassungselement (51) mindestens einen Abtastsensor umfasst.

5. Schneidwerk nach dem vorhergehenden Anspruch, **dadurch gekennzeichnet, dass** das Erfassungselement (51) mindestens einen Kontaktbildsensor umfasst.

6. Schneidwerk nach einem der vorhergehenden Ansprüche, **dadurch gekennzeichnet, dass** das Detektionselement (5; 51) im Wesentlichen flach ist.

7. Schneidwerk nach einem der vorhergehenden Ansprüche, **dadurch gekennzeichnet, dass** die Erfassungsvorrichtung (4; 41) mindestens eine Lichtquelle (10) umfasst, die insbesondere in das Erfassungselement (5; 51) integriert ist.

8. Schneidwerk nach einem der vorhergehenden Ansprüche, **dadurch gekennzeichnet, dass** die Bildaufnahmevorrichtung (4; 41) mit dem Träger (2) verbunden ist.

9. Schneidwerk nach einem der vorhergehenden Ansprüche 1-7, **dadurch gekennzeichnet, dass** die Bildaufnahmevorrichtung (4; 41) in Bezug auf den Träger (2) beweglich ist.

10. Schneidwerk nach einem der vorhergehenden Ansprüche, **dadurch gekennzeichnet, dass** das Erfassungselement (5; 51) entlang der vom Schneidwerkzeug (3) gebildeten Schnittlinie bewegbar ist.

11. Werkzeugmaschine zur Bearbeitung von Platten, insbesondere von Holzplatten, mit mindestens einer Station zum Laden/Entladen (S1, S3) mindestens einer Platte oder eines Plattenpakets (P); einer Bearbeitungsstation (S2) mit einer Arbeitsebene zum Tragen der mindestens einen Platte oder des Plattenpakets (P), einer Bewegungsgruppe zum Bewegen der mindestens einen Platte oder des Plattenpakets (P) entlang einer Vorschubrichtung (X), die sich der Bearbeitungsstation (S2) nähert und/oder sich von ihr entfernt; und eine Schneideeinheit nach einem der vorhergehenden Ansprüche, wobei die Schneideeinheit entlang einer Schneidelinie (L) orthogonal zu der Vorschubrichtung (X) bewegbar ist, um die mindestens eine Platte oder den mindestens einen Plattenstapel (P) zu schneiden.

12. Werkzeugmaschine zum Bearbeiten von Platten, insbesondere von Holzplatten, mit einer Auflagefläche (15) zum Tragen mindestens einer Platte (P), einem Bearbeitungskopf (16), der der Auflagefläche (15) gegenüberliegt und mit mindestens einem Werkzeug (3) zum Bearbeiten der Platte (P) ausgestattet ist, wobei der Bearbeitungskopf (16) eine Schneidwerk nach einem der vorhergehenden Ansprüche 1-10 aufweist.

13. Werkzeugmaschine nach dem vorhergehenden Anspruch, **dadurch gekennzeichnet, dass** die Bildaufnahmevorrichtung (4; 41) in Bezug auf den Bearbeitungskopf beweglich ist.

14. Werkzeugmaschine nach einem der Ansprüche 11-13, mit einer Steuereinheit (12), die betriebsmäßig mit der Bilderfassungsvorrichtung (4; 41) verbunden ist, wobei die Steuereinheit (12) so konfiguriert ist, dass sie die erfassten Bilder mit Referenzbildern vergleicht.

15. Verfahren zur Bearbeitung von Platten, insbesondere von Holzplatten, mit den folgenden Schritten:
Ausführen mindestens eines Schnitts an mindestens einer Platte oder einem Plattenpaket (P), um mindestens einen ersten Abschnitt (P1) der Platte oder des Plattenpakets (P) von dem übrigen Teil (P2) der Platte oder des Plattenpakets (P) zu trennen, wobei ein Zwischenraum (S) zwischen dem ersten Abschnitt (P1) und dem übrigen Teil (P2) der Platte oder des Plattenpakets (P) geschaffen wird;
**dadurch gekennzeichnet, dass** es umfasst,
Einführen eines Erfassungselements (5) einer Bilderfassungsvorrichtung in den Raum (S), der zwischen dem ersten Abschnitt (P1) und dem restlichen Teil (P2) der Platte oder des Plattenpakets (P) entsteht;
Erfassen mindestens eines Bildes von mindestens einem Bereich (6) der Oberfläche des ersten Abschnitts (P1), der dem Raum (S) zugewandt ist, und/oder von mindestens einem Bereich (7) der Oberfläche des verbleibenden Teils (P2) der Platte oder des Plattenpakets (P), der dem Raum zugewandt ist;
Vergleichen des aufgenommenen Bildes mit einem Referenzbild.

16. Verfahren nach dem vorhergehenden Anspruch, das die folgenden Schritte umfasst:
Bewegen des Erfassungselements (5) entlang des Raums (S), der zwischen dem ersten Abschnitt (P1) und dem verbleibenden Teil (P2) der Platte oder des Plattenpakets (P) entsteht;
Erfassen mindestens eines Bildes mindestens eines Bereichs (6) der Oberfläche des ersten Abschnitts (P1), der dem Raum (S) zugewandt ist, und/oder mindestens eines Bereichs (7) der Oberfläche des verbleibenden Teils (P2) der Platte oder des Plattenpakets (P), der dem Raum zugewandt ist, während der Bewegung des Erfassungselements (5).

17. Verfahren nach einem der Ansprüche 15 oder 16, das einen Verarbeitungsschritt des aufgenommenen Bildes umfasst.

## Revendications

1. Unité de coupe pour une machine de traitement de panneaux, comprenant un support (2, 18); au moins un outil de coupe (3) associé audit support (2, 18) et apte à effectuer au moins une coupe sur au moins un panneau ou paquet de panneaux (P), de manière à séparer au moins une première partie (P1) dudit panneau ou paquet de panneaux (P) de la partie restante (P2) du panneau ou paquet de panneaux (P), créer un espace (S) entre ladite première partie (P1) et la partie restante (P2) du panneau ou paquet de panneaux (P), ledit support (2, 18) et ledit panneau ou paquet de panneaux (P) étant mobiles l'un par rapport à l'autre; et un dispositif de capture d'images (4; 41) adapté pour être associé audit support (2, 18), ladite unité de coupe étant **caractérisée en ce que** ledit dispositif de capture d'images (4) comprend au moins un élément de détection (5; 51) adapté pour être inséré dans l'espace (S) créé entre ladite première partie (P1) et la partie restante (P2) du panneau ou du paquet de panneaux (P), ledit élément de détection (5; 51) étant adapté pour détecter au moins une zone (6) de la surface de la première partie (P1) faisant face audit espace (S) et/ou au moins une zone (7) de la surface de la partie restante (P2) du panneau ou du paquet de panneaux (P) faisant face audit espace (S).

2. Unité de coupe selon la revendication précédente, **caractérisée par le fait que** ledit élément de détection (5) comprend au moins une surface réfléchissante.

3. Unité de coupe selon l'une quelconque des revendications précédentes, **caractérisée en ce que** ledit dispositif de capture (4) comprend au moins une caméra (9, 9').

4. Unité de coupe selon l'une des revendications précédentes 1-3, **caractérisée par le fait que** l'élément de détection (51) comprend au moins un capteur de balayage.

5. Unité de coupe selon la revendication précédente, **caractérisée par le fait que** l'élément de détection (51) comprend au moins un capteur d'image de contact.

6. Unité de découpe selon l'une quelconque des revendications précédentes, **caractérisée en ce que** ledit élément de détection (5; 51) est sensiblement plat.

7. Unité de coupe selon l'une quelconque des revendications précédentes, **caractérisée en ce que** le dispositif de capture (4; 41) comprend au moins une source lumineuse (10), notamment intégrée dans l'élément de détection (5; 51).

8. Unité de coupe selon l'une quelconque des revendications précédentes, **caractérisée en ce que** ledit dispositif de capture d'images (4; 41) est solidaire dudit support (2).

9. Unité de coupe selon l'une quelconque des revendications précédentes 1-7, **caractérisée en ce que** ledit dispositif de capture d'images (4; 41) est mobile par rapport audit support (2).

10. Unité de coupe selon l'une quelconque des revendications précédentes, **caractérisée en ce que** ledit élément de détection (5; 51) est mobile le long de la ligne de coupe réalisée par l'outil de coupe (3).

11. Machine-outil pour l'usinage de panneaux, en particulier de panneaux de bois, comprenant au moins un poste de chargement/déchargement (S1, S3) d'au moins un panneau ou paquet de panneaux (P); un poste d'usinage (S2) comprenant un plan de travail, pour supporter ledit au moins un panneau ou paquet de panneaux (P), un groupe de déplacement pour déplacer ledit au moins un panneau ou paquet de panneaux (P) le long d'une direction d'avancement (X), en s'approchant et/ou en s'éloignant dudit poste d'usinage (S2); et une unité de coupe selon l'une quelconque des revendications précédentes, dans laquelle l'unité de coupe est mobile le long d'une ligne de coupe (L) orthogonale à ladite direction d'avancement (X), pour couper ledit au moins un panneau ou paquet de panneaux (P).

12. Machine-outil pour l'usinage de panneaux, notamment de panneaux de bois, comprenant un plan de support (15) pour supporter au moins un panneau (P), une tête d'usinage (16), opposée à ladite surface de support (15) et équipée d'au moins un outil (3) pour l'usinage dudit panneau (P), ladite tête d'usinage (16) comprenant une unité de coupe selon l'une quelconque des revendications précédentes 1-10.

13. Machine-outil selon la revendication précédente, **caractérisée par le fait que** le dispositif de capture d'images (4; 41) est mobile par rapport à la tête d'usinage.

14. Machine-outil selon l'une des revendications 11 à 13, comprenant une unité de commande (12) connectée de manière opérationnelle audit dispositif de capture d'images (4; 41), ladite unité de commande (12) étant configurée pour comparer les images capturées avec des images de référence.

15. Procédé d'usinage de panneaux, en particulier de panneaux en bois, comprenant les étapes suivantes:
effectuer au moins une coupe sur au moins un panneau ou paquet de panneaux (P), de manière à séparer au moins une première partie (P1) dudit panneau ou paquet de panneaux (P) de la partie restante (P2) du panneau ou paquet de panneaux (P), en créant un espace (S) entre ladite première partie (P1) et la partie restante (P2) du panneau ou paquet de panneaux (P);
**caractérisé en ce qu'**il comprend,
insérer un élément de détection (5) d'un dispositif de capture d'images dans l'espace (S) créé entre ladite première partie (P1) et la partie restante (P2) du panneau ou du paquet de panneaux (P);
capturer au moins une image d'au moins une zone (6) de la surface de la première partie (P1) orientée vers ledit espace (S) et/ou au moins une zone (7) de la surface de la partie restante (P2) du panneau ou de l'ensemble de panneaux (P) orientée vers ledit espace;
comparer l'image capturée avec une image de référence.

16. Procédé selon la revendication précédente, comprenant les étapes de:
déplacer l'élément de détection (5) le long de l'espace (S) créé entre ladite première partie (P1) et la partie restante (P2) du panneau ou du paquet de panneaux (P);
capturer au moins une image d'au moins une zone (6) de la surface de la première partie (P1) en regard dudit espace (S) et/ou d'au moins une zone (7) de la surface de la partie restante (P2) du panneau ou du paquet de panneaux (P) en regard dudit espace pendant le déplacement de l'élément de détection (5).

17. Procédé selon l'une des revendications 15 ou 16, comprenant une étape de traitement de l'image capturée.
